# EUROPÄISCHE PATENTSCHRIFT

(11) **EP 3 097 012 B1**
(45) Veröffentlichungstag und Bekanntmachung des Hinweises auf die Patenterteilung: **17.05.2017**
(21) Anmeldenummer: 15708695.0
(22) Anmeldetag: 20.01.2015
(51) Int. Cl.: B64C 1/14

(54) **VORRICHTUNG ZUM ÖFFNEN EINER FLUGZEUGTÜR**
DEVICE FOR OPENING AN AIRCRAFT DOOR
DISPOSITIF D'OUVERTURE D'UNE PORTE D'AVION

(30) Priorität: 21.01.2014 AT 500352014
(43) Veröffentlichungstag der Anmeldung: 30.11.2016
(73) Patentinhaber: FACC AG, 4910 Ried im Innkreis (AT)
(72) Erfinder: KAMMERER, Bernhard, A-4755 Zell/Pram (AT); SCHÖRKHUBER, Jakob, A-4682 Geboltskirchen (AT); BURGHOZER, Thomas, A-4780 Schärding (AT)
(74) Vertreter: Sonn & Partner Patentanwälte
(86) Internationale Anmeldenummer: PCT/AT2015/050017
(87) Internationale Veröffentlichungsnummer: WO 2015/109352

(56) Entgegenhaltungen:
- EP-A1- 0 465 785
- GB-A- 868 390
- US-A- 2 997 751
- US-A1- 2006 202 087

## Beschreibung

Die Erfindung betrifft eine Vorrichtung zum Öffnen einer an einem Flugzeugrumpf vorgesehenen Flugzeugtür, mit einem Tragarm, welcher gelenkig zwischen dem Flugzeugrumpf und der Flugzeugtür anordenbar ist, mit einer Öffnungseinrichtung zum Öffnen der Flugzeugtür durch Anheben der Flugzeugtür aus einer Schließstellung in eine Zwischenstellung und Überführen der Flugzeugtür aus der Zwischenstellung in eine Offenstellung, mit einer den Tragarm in der Schließstellung der Flugzeugtür im Wesentlichen vollständig abdeckenden Tragarmverkleidung, wobei die Tragarmverkleidung ein unbeweglich am Tragarm angeordnetes Verkleidungselement und ein beim Öffnen der Flugzeugtür zwischen einem im Wesentlichen bündig mit dem Verkleidungselement abschließenden Zustand und einem mit dem Verkleidungselement überlappenden Zustand verschwenkbares Klappenelement aufweist, und mit einer Führungseinrichtung zum Führen des Klappenelements beim Öffnen der Flugzeugtür.

Solche Vorrichtungen sind im Stand der Technik bekannt. Zum Öffnen der Flugzeugtür wird die Flugzeugtür zunächst geringfügig aus der abgedichteten Schließstellung angehoben und danach in die Offenstellung verschoben bzw. verschwenkt. Aus der DE 10 2011 109 652 A1 ist beispielsweise eine solche Vorrichtung bekannt, bei welcher die Flugzeugtür mittels eines Tragarms am Flugzeugrumpf verschwenkbar gelagert ist. Die Sichtseite des Tragarms ist hierbei mit einer Abdeckung verkleidet.

Aus Gründen der Sicherheit und aus ästhetischen Gesichtspunkten ist es erforderlich, dass die dem Passagierraum zugewandte Innenseite der Flugzeugtür im Wesentlichen vollständig von einer Verkleidung abgedeckt ist. Zu diesem Zweck ist eine Tragarmverkleidung vorgesehen, welche zur Freistellung der Schwenkbewegung des Tragarms ein Klappenelement aufweist, welches beim Öffnen der Tür relativ zu einem feststehenden Verkleidungselement verschwenkbar ist. Dadurch kann das Verkleidungselement unter das Klappenelement gleiten.

Im Stand der Technik wurden bisher zwei verschiedene Konzepte zur Ansteuerung des Klappenelements eingesetzt, welche jedoch aus verschiedenen Gründen nachteilig sind.

Einerseits wurde das Klappenelement mittels einer Rolle unter Federvorspannung an der Sichtseite der Verkleidung des Tragarms geführt. Das Abrollen verursacht nachteiligerweise Abnützungsspuren an der Sichtseite der Verkleidung, welche vermieden werden sollen. Es könnten zwar auch Führungsstreifen aus Metall an der Außenseite der Verkleidung angebracht werden. Dadurch wird jedoch nachteiligerweise in das homogene Erscheinungsbild der Verkleidung eingegriffen.

Andererseits ist es im Stand der Technik bekannt, das Klappenelement über eine mechanische Verbindung in Form einer Zugstange kinematisch anzusteuern. Aufgrund der begrenzten Platzverhältnisse in der Einbausituation kann das Klappenelement hierbei jedoch nachteiligerweise nur sehr nahe am Schwenkpunkt des Klappenelements an der Flugzeugtür angelenkt werden. Es hat sich jedoch gezeigt, dass diese Ausführung zu sensibel reagiert und zu Fehlfunktionen neigt. Weiters ist der hohe bauliche Aufwand nachteilig.

Darüber hinaus sind im Stand der Technik verschiedenste Vorrichtungen zum Öffnen von Flugzeugtüren bekannt geworden, bei welchen jedoch nicht auf die Problematik der Verschwenkung und Führung des Klappenelements der Türinnenverkleidung eingegangen wird.

Die EP 0 317 037 A2 offenbart einen andersartigen Gelenkmechanismus für eine Flugzeugtür, mit welchem die Flugzeugtür schwenkbar mit dem Rumpf verbunden wird. Zu diesem Zweck sind Führungselemente in der Art einer Kulissenführung vorgesehen. Dieser Stand der Technik kann jedoch keinen Beitrag dazu liefern, das Klappenelement einer Türverkleidung beim Öffnen der Tür zuverlässig über die Sichtseite der Verkleidung zu führen. Dafür wäre die Kulissenführung aus dem Stand der Technik schon aus Platzgründen ungeeignet.

Die GB 1,228,969 A beschreibt eine am Rumpf eines Flugzeugs gelagerte Flugzeugtür, welche mittels eines Schwenkmechanismus geöffnet werden kann. Zur Vergrößerung der Türöffnung kann die Flugzeugtür mittels in einer oberen und einer unteren Führungsschiene angeordneter Rollen entlang der Außenseite des Rumpfs verschoben werden.

Die US 2006/202087 A1, die als nächstliegender Stand der Technik angesehen wird, offenbart eine Gelenkvorrichtung zur schwenkbaren Verbindung einer Flugzeugtür mit einem Flugzeugrumpf. Die Gelenkvorrichtung weist ein gebogenes Schwenkelement auf, welches am einen Ende verschwenkbar mit einem Befestigungselement verbunden ist und am anderen Ende mit Befestigungselementen schwenkbar verbunden ist. Zur Lösung der an die vorliegende Erfindung gestellten Aufgabe kann dieser Stand der Technik jedoch ebenfalls nicht beitragen.
Die DE 29 07 550 A1 bezieht sich auf eine andersartige Falt-Einsatztür für Flugzeuge zum Öffnen bzw. Verschließen einer Öffnung in einem Rumpf, wobei die Öffnung kleiner als die Tür ist.
Weiters offenbart die GB 868 390 A einen Öffnungsmechanismus für eine Flugzeugtür, welche über ein Hauptgelenk und ein Nebengelenk mit einem Flugzeugrumpf verbunden ist. Am Türrahmen und an der Tür sind jeweils korrespondierende Vorsprünge vorgesehen, welche im geschlossenen Zustand reibschlüssig aneinander liegen und somit das Öffnen der Türe verhindern. Mittels eines Hebemechanismus und mehreren am unteren Türrahmen vorgesehene Bolzen wird die Türe vertikal verschoben, womit die Vorsprünge nicht mehr blockieren und die Türe dadurch zum Öffnen freigegeben wird.
Die US 2 997 751 zeigt ebenfalls eine Flugzeugtür mit einem andersartigen Öffnungsmechanismus. Dieser weist ein Paar Tragarme auf, welches an einem Ende mit der Flugzeugkabine und am anderen Ende drehbar mit einem verschlieblich gelagerten Träger verbunden ist. Dieser Träger ist über einen Bolzen translatorisch mit der Türe verbunden und ermöglicht somit eine geeignete Verschiebung der Flugzeugtüre während des Öffnens.
Bei der EP 0 465 785 werden programmgesteuerte Elektromotoren verwendet, um eine Flugzeugtüre zu verschwenken. Ein elektrisch aktuierter Traglenker mit zwei Kreuzgelenken, in welche jeweils ein um eine horizontale Achse schwenkbarer Dreieckslenker angreift, verbindet die Tür mit dem Flugzeugrumpf. Zum Anheben und zum Fixieren der Tür sind jeweils eigene Elektromotor vorgesehen.

Schließlich offenbart die CN 101570248 A einen andersartigen Hebemechanismus für Flugzeugtüren und die CN 201484657 U einen andersartigen Schwenkmechanismus für Flugzeugtüren.

Demgegenüber besteht die Aufgabe der vorliegenden Erfindung darin, die Nachteile des Standes der Technik zu lindern bzw. zu beheben. Die Erfindung setzt sich insbesondere zum Ziel, eine konstruktiv einfache Vorrichtung der eingangs angeführten Art zu schaffen, mit welcher die begrenzten Platzverhältnisse beim Öffnen der Flugzeugtür berücksichtigt werden und mit welcher die Sichtseite der Tragarmverkleidung im Einsatz geschont werden kann.
Diese Aufgabe wird durch eine Vorrichtung mit den Merkmalen des Anspruchs 1 gelöst. Bevorzugte Ausführungen sind in den abhängigen Ansprüchen angegeben.

Erfindungsgemäß weist die Führungseinrichtung daher zumindest einen Führungsarm auf, welcher an dem einen Ende gelenkig mit dem Tragarm und an dem anderen Ende mit zumindest einem Führungselement verbunden ist, welches beim Öffnen der Flugzeugtür entlang einer Führungsbahn an der Innenseite des Klappenelements führbar ist.

In der Schließstellung der Flugzeugtür sind das unbeweglich angeordnete Verkleidungselement und das verschwenkbare Klappenelement im Wesentlichen bündig, d.h. in derselben Ebene nebeneinander, angeordnet, wobei zwischen den benachbarten Randbereichen des Verkleidungselements bzw. des Klappenelements im Wesentlichen kein Spalt gebildet ist. Somit ist die dem Flugzeuginneren zugewandte Sichtseite des Tragarms, welcher einerseits an dem Flugzeugrumpf und andererseits an der Flugzeugtür gelenkig gelagert ist, in der Schließstellung im Wesentlichen vollständig von der zumindest aus dem Verkleidungselement und dem Klappenelement bestehenden Tragarmverkleidung abgedeckt. Die Flugzeugtür ist auf Seite des Flugzeuginnenraums ebenfalls mit Verkleidungselementen versehen. Zur Einleitung des Öffnungsvorgangs wird üblicherweise ein Betätigungshebel an der Innenseite der Flugzeugtür umgelegt. Dadurch wird die Flugzeugtür aus einer den Flugzeugrumpf abdichtenden Schließstellung im Wesentlichen in vertikaler Richtung nach oben in eine Zwischenstellung angehoben. Danach kann die Flugzeugtür nach außen in die Offenstellung verschoben bzw. verschwenkt werden, wobei eine Einstiegsöffnung in das Flugzeug freigegeben wird. Die Flugzeugtür ist bevorzugt so an dem Tragarm gelagert, dass die Flugzeugtür zunächst nach außen verschoben und danach im Wesentlichen parallel zum Flugzeugrumpf in die Offenstellung geführt wird. Dieser Öffnungsmechanismus ist im Stand der Technik an sich bekannt. Beim Verschwenken des Tragarms wird das Klappenelement, welches bevorzugt um eine insbesondere im Wesentlichen vertikale Schwenkachse an der Flugzeugtür gelagert ist, über die Sichtseite des Verkleidungselements, in einem Abstand dazu, verschoben. Damit kann die Verschwenkung des Tragarms freigestellt werden. Das Führungselement der Führungseinrichtung wird an der Innenseite des Klappenelements, d.h. an der von der Sichtseite abgewandten Seite des Klappenelements, geführt. Dadurch wird das Klappenelement beim Verschwenken des Tragarms in einem Abstand zu der Sichtseite des Verkleidungselements gehalten. Zu diesem Zweck ist das Führungselement am Ende eines Führungsarms angeordnet, welcher direkt oder indirekt über ein Befestigungselement gelenkig an dem Tragarm gelagert ist. Beim Öffnen der Flugzeugtür wird der Führungsarm nach oben verschwenkt, wodurch der Normalabstand, d.h. der horizontale Abstand, zwischen der gelenkigen Verbindung des Führungsarms auf der Seite des Tragarms und dem Führungselement auf der Seite des Klappenelements vergrößert wird. Demnach wird die Führungseinrichtung durch Verschwenken des Führungsarms aus einem gestauchten Zustand in der Schließstellung der Flugzeugtür in einen auseinandergezogenen Zustand der Führungseinrichtung in der Offenstellung der Flugzeugtür bewegt. Hiermit kann zuverlässig gewährleistet werden, dass das Klappenelement beim Verschwenken des Tragarms in die überlappende Stellung mit dem Verkleidungselement geführt werden kann. In der überlappenden Stellung ist das Klappenelement teilweise oberhalb des Verkleidungselements angeordnet. Da die Führungseinrichtung erfindungsgemäß nicht mit der Sichtseite des Verkleidungselements in Kontakt tritt, kann vorteilhafterweise die Sichtseite des Verkleidungselements vor Gebrauchsspuren geschützt werden. Darüber hinaus zeichnet sich die erfindungsgemäße Führungseinrichtung durch geringen Platzbedarf auf. Weiters ist von Vorteil, dass das Führungselement nahe am verschwenkbaren Randbereich des Klappenelements angreifen kann, wodurch eine besonders zuverlässige, präzise Führung des Klappenelements beim Öffnen der Flugzeugtür ermöglicht wird. Demgegenüber konnte die beim Stand der Technik vorgesehene Zugstange nachteiligerweise nur sehr nahe am Drehpunkt des Klappenelements gelagert werden. Weiters bringt die erfindungsgemäße Führungseinrichtung den Vorteil mit sich, dass die Kraft zur Verpressung der Dichtungen in der Schließstellung der Flugzeugtür besonders effizient eingeleitet werden kann.

Um die Führung des Klappenelements zuverlässig und mit geringem baulichen Aufwand zu bewerkstelligen, ist es günstig, wenn das Führungselement zumindest ein Rollenelement aufweist, welches an der Führungsbahn an der Innenseite des Klappenelements abrollbar ist. Beim Öffnen der Flugzeugtür wird über das Rollenelement am Ende des Führungselements eine Kraft auf das Klappenelement ausgeübt, welche eine Verschwenkung des Klappenelements nach außen, weg von dem unbeweglichen Verkleidungselement bewirkt. Der Führungsarm zwischen dem Rollenelement und dem Tragarm wird beim Öffnen der Flugzeugtür derart verschwenkt, dass der Normalabstand, d.h. der Abstand in horizontaler Richtung, zwischen dem Gelenk des Führungsarms auf der Seite des Tragarms und dem Rollenelement auf der Seite der Führungsbahn zunimmt. Auf diese Weise kann ein Auflaufen des Klappenelements auf das Verkleidungselement beim Verschwenken der Flugzeugtür zuverlässig verhindert werden. Die Führung des Klappenelements kann besonders präzise gewährleistet werden, wenn die Führungsbahn an der Innenseite des Klappenelements bis in einen dem Verkleidungselement benachbarten Randbereich reicht. Beim Verschwenken des Tragarms wird das Führungselement ausgehend von dem Randbereich des Klappenelements in Richtung zur Schwenkachse des Klappenelements hin geführt.

Zur Kraftübertragung zwischen dem Führungselement und dem Klappenelement ist es vorteilhaft, wenn das Führungselement ein um eine im Wesentlichen vertikale Drehachse drehbares Rollenelement aufweist, welches an einer im Wesentlichen vertikalen Führungsfläche der Führungsbahn abrollbar ist.

Für die Zwecke dieser Offenbarung bedeutet "vertikal" die Richtung des Anhebens der Flugzeugtür vor der Verschwenkung, d.h. im montierten Zustand die Richtung senkrecht zur Bodenfläche des Flugzeugs. Darauf sollen sich auch die Angaben "oben" und "unten" beziehen. Dementsprechend bedeutet "horizontal" die Ebene senkrecht zur Anhebebewegung der Flugzeugtür.

Gemäß einer besonders bevorzugten Ausführung weist das Führungselement ein um eine im Wesentlichen horizontale Drehachse drehendes Rollenelement auf, welches an einem entsprechenden, insbesondere im Wesentlichen horizontalen Führungsvorsprung der Führungsbahn abrollbar ist. Bei dieser Ausführung kann die vertikale Position des Führungselements über den Führungsvorsprung der Führungsbahn festgelegt werden. Vorzugsweise rollt das horizontal drehende Rollenelement auf der Oberseite des horizontalen Führungsvorsprungs ab. Diese Ausführung hat den Vorteil, dass das Führungselement beim Anheben der Flugzeugtür von dem Führungsvorsprung an dem Klappenelement nach oben mitgenommen wird, wodurch der Führungsarm nach oben verschwenkt und das Klappenelement nach außen gedrückt wird.

Um eine bessere Führung des Rollenelements zu erreichen, ist es von Vorteil, wenn das horizontal drehende Rollenelement im Durchmesser zum freien Ende hin zunimmt. Die Höhe des Führungsvorsprungs nimmt bevorzugt entsprechend dem horizontal drehenden Rollenelement nach außen hin, weg von der Innenseite des Klappenelements zu. Demnach wird am horizontal drehenden Rollenelement eine Hinterschneidung gebildet, mit welcher ein zuverlässiger Kontakt zur entsprechend geformten Führungsfläche des Führungsvorsprungs an der Innenseite des Klappenelements erzielt wird.

Darüber hinaus ist es günstig, wenn der Führungsvorsprung für das horizontal drehende Rollenelement einen Höhenverlauf aufweist. Bei dieser Ausführung weist die Führungsfläche des Führungsvorsprungs einen Abschnitt mit einem in vertikaler Richtung veränderlichen, insbesondere ansteigenden, Verlauf auf. Vorteilhafterweise kann hiermit der Normalabstand zwischen dem Führungselement an der Innenseite des Klappenelements und der Lagerung des Führungsarms am Tragarm präzise eingestellt werden, um die gewünschte Verschwenkbewegung des Klappenelements zu erzielen.

Vorzugsweise ist an der Innenseite des Klappenelements ein die Führungsbahn für das Führungselement ausbildendes Lagerelement montiert. Prinzipiell wäre es jedoch auch denkbar, dass die Führungsbahn direkt an der Innenseite des Klappenelements ausgebildet ist.

Um das Klappenelement beim Öffnen der Flugzeugtür über das unbewegliche Verkleidungselement zu führen, ist es günstig, wenn der zumindest eine Führungsarm mit einem Federelement verbunden ist, so dass der zumindest eine Führungsarm mit Unterstützung des Federelements aus einem gestauchten Zustand der Führungseinrichtung in der Schließstellung der Flugzeugtür in einen zumindest teilweise auseinandergezogenen Zustand der Führungseinrichtung in der Offenstellung der Flugzeugtür überführbar ist. Das Federelement drückt daher den Führungsarm in Richtung des auseinandergezogenen Zustands der Führungseinrichtung, in welchem der Normalabstand zwischen dem Führungselement und der gelenkigen Verbindung des Führungsarms mit dem Tragarm größer als bei dem gestauchten Zustand der Führungseinrichtung ist. Zu diesem Zweck ist der Führungsarm im gestauchten Zustand der Führungseinrichtung in einem steileren Winkel zur Horizontalen als im auseinandergezogenen Zustand der Führungseinrichtung angeordnet.

Zur Vorspannung des Führungsarms in Richtung des auseinandergezogenen Zustands der Führungseinrichtung ist es vorteilhaft, wenn als Federelement eine Torsionsfeder vorgesehen ist, welche bevorzugt um das Gelenk des Führungsarms auf der Seite des Tragarms angeordnet ist. Diese Ausführung ist konstruktiv einfach und dauerhaft.

Gemäß einer besonders bevorzugten Ausführung weist die Führungseinrichtung zwei insbesondere im Wesentlichen parallel zueinander angeordnete Führungsarme auf, welche an den einen Enden gelenkig an dem Tragarm und an den anderen Enden gelenkig mit einem Verbindungselement zwischen den Führungsarmen verbunden sind. Vorzugsweise sind genau zwei Führungsarme vorgesehen, so dass ein Viergelenker geschaffen wird. Das Führungselement ist bevorzugt an dem Verbindungselement zwischen den Führungsarmen gelagert. Vorteilhafterweise kann hiermit das Führungselement in gleichbleibender Winkellage, insbesondere in vertikaler Stellung, an der Führungsbahn geführt werden, wenn die Führungsarme beim Öffnen der Tür verschwenkt werden.

Zur Erzielung einer belastbaren, konstruktiv einfachen Ausführung weist das Verbindungselement bevorzugt einen länglichen Verbindungsarm auf, dessen Enden gelenkig mit den Führungsarmen verbunden sind.

Bei dieser Ausführung ist bevorzugt vorgesehen, dass der Verbindungsarm in Längsrichtung beabstandete Aufnahmestellen zur Aufnahme eines das vertikal drehende Rollenelement lagernden Wellenelements aufweist.

Zudem ist es günstig, wenn der Verbindungsarm eine Bohrung zur Aufnahme eines das horizontal drehende Rollenelement lagernden Achsenelements aufweist.

Zur Anbringung der Führungseinrichtung an dem Tragarm ist es von Vorteil, wenn das Gelenk zwischen dem Führungsarm und dem Tragarm an einem Befestigungselement ausgebildet ist, welches bevorzugt an einer dem Klappenelement zugewandten Stirnseite des Tragarms montiert ist. Das Befestigungselement befindet sich daher vorzugsweise hinter der Tragarmverkleidung, d.h. auf der von der Sichtseite abgewandten Seite der Tragarmverkleidung, so dass die Führungseinrichtung im Betrieb nicht sichtbar ist.

Wenn die Führungseinrichtung an dem Tragarm ein Kulissenelement aufweist, in welchem beim Anheben der Flugzeugtür ein Führungsteil an der Innenseite des Klappenelements führbar ist, kann vorteilhafterweise die Führung des Klappenelements zu Beginn des Öffnungsvorgangs bzw. am Ende des Schließvorgangs unterstützt werden. Die Führung des Klappenelements mittels des Kulissenelements bzw. des Führungsteils ist bevorzugt nur während des Anhebens der Flugzeugtür am Anfang des Öffnungsvorgangs und während des Absenkens der Flugzeugtür am Ende des Öffnungsvorgangs wirksam, wobei dazwischen die Führung des Klappenelements mit dem an der Führungsbahn des Klappenelements geführten Führungselement bewerkstelligt wird.

Um die Vertikalbewegung der Flugzeugtür auf das Klappenelement zu übertragen, ist es insbesondere vorteilhaft, wenn das Kulissenelement einen schräg zur Vertikalen verlaufenden, einseitig offenen Führungskanal aufweist, so dass die Verschiebung des Führungsteils entlang des Führungskanals des Kulissenelements beim Anheben der Flugzeugtür in eine Verschwenkung des Klappenelements umgesetzt wird. Durch das Anheben der Flugzeugtür wird das Klappenelement relativ zu dem Verkleidungselement nach oben verschoben. Aufgrund der Kulissenführung wird das Klappenelement gleichzeitig nach außen verschwenkt, so dass zwischen dem Verkleidungselement und dem Klappenelement ein Spalt ausgebildet wird. Ausgehend von dieser Stellung kann die Flugzeugtür durch Verschwenken des Tragarms geöffnet werden, wobei das Klappenelement an der Sichtseite des Verkleidungselements vorbei gleitet. Durch die Führungseinrichtung wird verhindert, dass das Klappenelement die Sichtseite des Verkleidungselements beschädigt.

Um die Funktion der Kulissenführung dauerhaft zu gewährleisten, ist es günstig, wenn der Führungsteil eine Führungsrolle aufweist, welche an einer Wandung des Kulissenelements abrollbar ist.

Um die bündige Anordnung zwischen Verkleidungselement und Klappenelement bei Erreichen der Schließstellung der Flugzeugtür zu gewährleisten, ist es günstig, wenn an dem Tragarm zumindest zwei Kulissenelemente für zumindest zwei Führungsteile an der Innenseite des Klappenelements vorgesehen sind, wobei vorzugsweise je ein Führungsteil am oberen Endbereich und am unteren Endbereich des Klappenelements angeordnet ist.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig. 1 schematisch eine erfindungsgemäße Vorrichtung zum Öffnen einer in der Schließstellung dargestellten Flugzeugtür, welche an einem Tragarm gelenkig gelagert ist, dessen Sichtseite durch eine Tragarmverkleidung mit einem unbeweglichen Verkleidungselement und einem verschwenkbaren Klappenelement gebildet ist;
Fig. 2 die Vorrichtung gemäß Fig. 1 in einer Zwischenstellung der Flugzeugtür, welche durch Anheben der Flugzeugtür aus der Schließstellung gemäß Fig. 1 erhalten wird;
Fig. 3 die Vorrichtung gemäß Fig. 1, 2 in einer nach außen verlagerten Offenstellung der Flugzeugtür;
Fig. 4 die Vorrichtung gemäß Fig. 1 bis 3 in einer Außenansicht auf das Flugzeug;
Fig. 5 eine Ansicht der Innenseite des Klappenelements bzw. des Tragarms zu Beginn des Öffnungsvorgangs, wobei das Klappenelement mittels einer Führungseinrichtung aus der bündigen Anordnung mit dem Verkleidungselement nach außen verschwenkt wird;
Fig. 6 eine Ansicht gemäß Fig. 5, wobei die Flugzeugtür die Zwischenstellung erreicht hat;
Fig. 7 eine Ansicht gemäß Fig. 5, 6 während der Verschwenkung des Tragarms, wobei ein Rollenelement am Ende eines Führungsarms entlang einer Führungsbahn an der Innenseite des Klappenelements geführt wird;
Fig. 8 bis 11 Querschnittsansichten des Tragarms bzw. der Tragarmverkleidung beim Öffnen der Flugzeugtür; und
Fig. 12 bis 14 Ansichten der in Fig. 4 bis 10 ersichtlichen Führungseinrichtung zum Führen des Klappenelements beim Öffnen der Flugzeugtür.

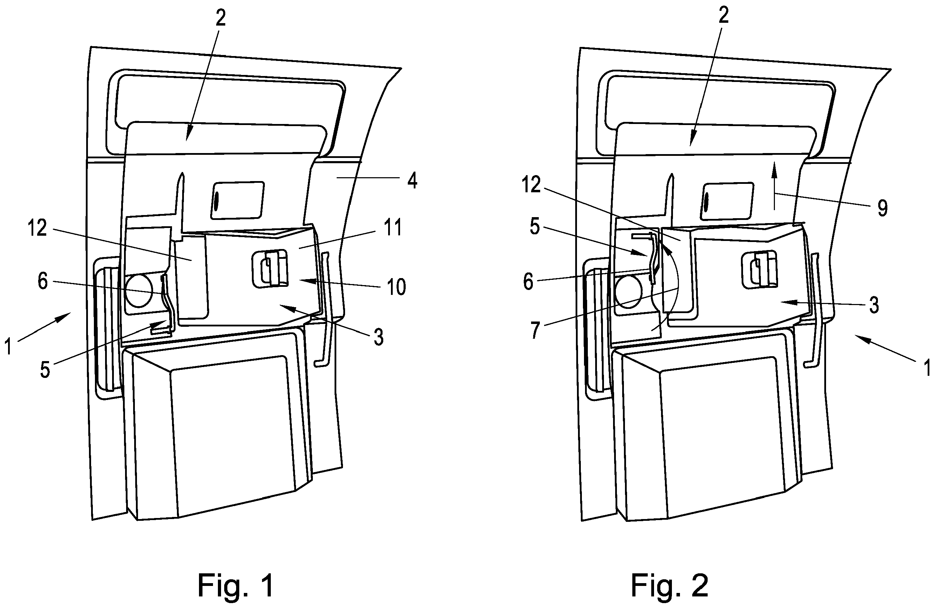

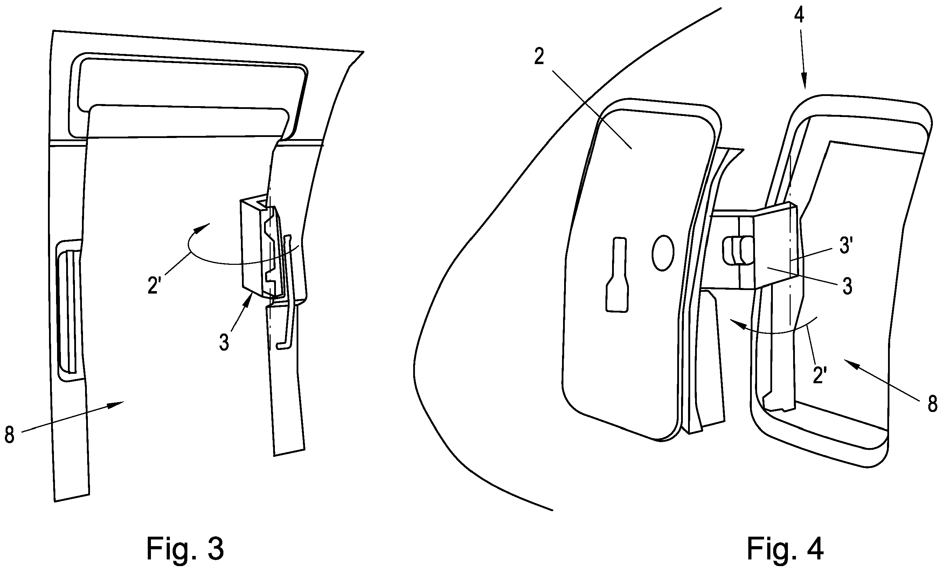

Fig. 1 bis 4 zeigt eine Vorrichtung 1 zum Öffnen einer Flugzeugtür 2 in verschiedenen Stadien des Öffnungsvorgangs. Die Flugzeugtür 2 ist gelenkig mit einem Tragarm 3 verbunden, welcher um eine vertikale Schwenkachse 3' (vgl. Fig. 4) schwenkbar an einem Flugzeugrumpf 4 gelagert ist. Zum Öffnen der Flugzeugtür 2 ist eine im Stand der Technik an sich bekannte Öffnungseinrichtung 5 vorgesehen, welche einen Betätigungshebel 6 aufweist. Durch Betätigung des Betätigungshebels 6 in Pfeilrichtung 7 wird die Flugzeugtür 2 aus einer Schließstellung (Fig. 1), in welcher eine Einstiegsöffnung 8 (vgl. Fig 3, 4) verschlossen ist, in vertikaler Richtung 9 nach oben in eine Zwischenstellung (Fig. 2) verschoben. Danach kann die Flugzeugtür 2 nach außen in Pfeilrichtung 2' in eine Offenstellung (vgl. Fig. 3, 4) gebracht werden, um die Einstiegsöffnung 8 freizugeben.

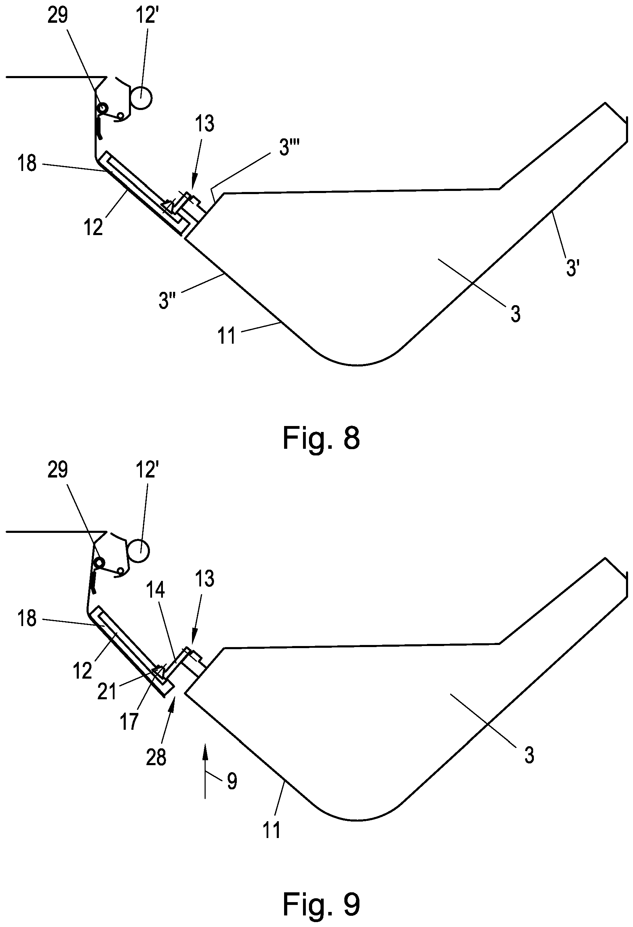

Wie aus Fig. 1 bis 3 weiters ersichtlich, ist der Tragarm 3 an der dem Flugzeuginneren zugewandten Seite mit einer Tragarmverkleidung 10 verbunden, welche in der Schließstellung der Flugzeugtür 2 den Tragarm 3 im Wesentlichen vollständig verdeckt und so die Sichtseite des Tragarms 3 bildet. Die Tragarmverkleidung 10 weist ein unbeweglich am Tragarm 3 angeordnetes Verkleidungselement 11 und ein um eine vertikale Schwenkachse 12' (vgl. Fig. 8 bis 11) an der Flugzeugtür 2 verschwenkbares Klappenelement 12 auf. Das Klappenelement 12 wird beim Öffnen der Flugzeugtür aus einem im Wesentlichen bündig mit dem Verkleidungselement 11 abschließenden bzw. im Wesentlichen spaltfrei nebeneinander angeordneten Zustand in der Schließstellung der Flugzeugtür 2 (vgl. Fig. 1) nach außen, weg von dem Verkleidungselement 11 verschwenkt. Danach kann das Klappenelement 12 beim Verschwenken des Tragarms 3 oberhalb der Sichtseite des Verkleidungselements 11 in einen mit dem Verkleidungselement 11 überlappenden Zustand gleiten.

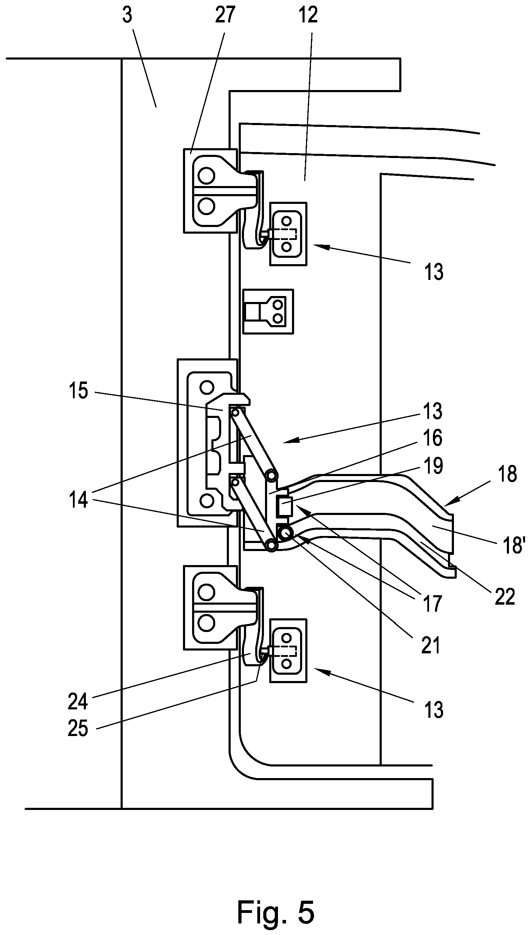

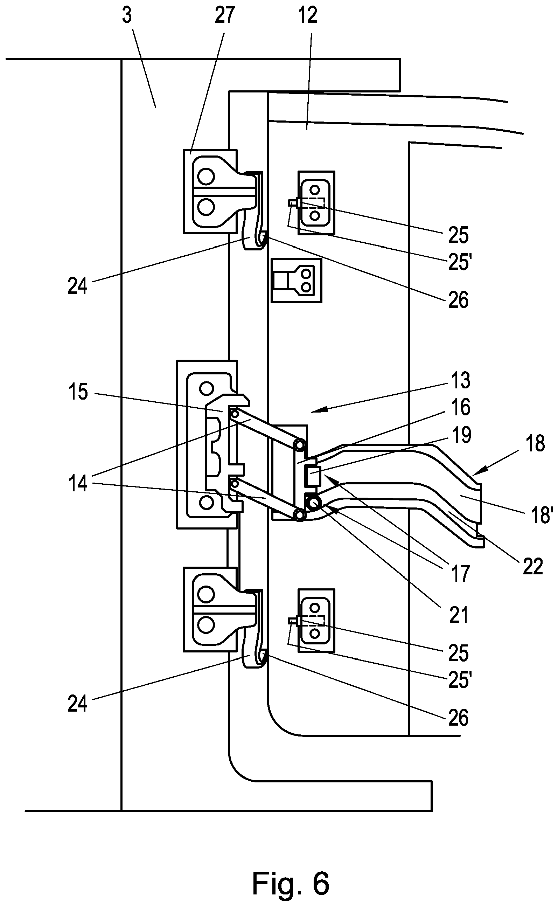

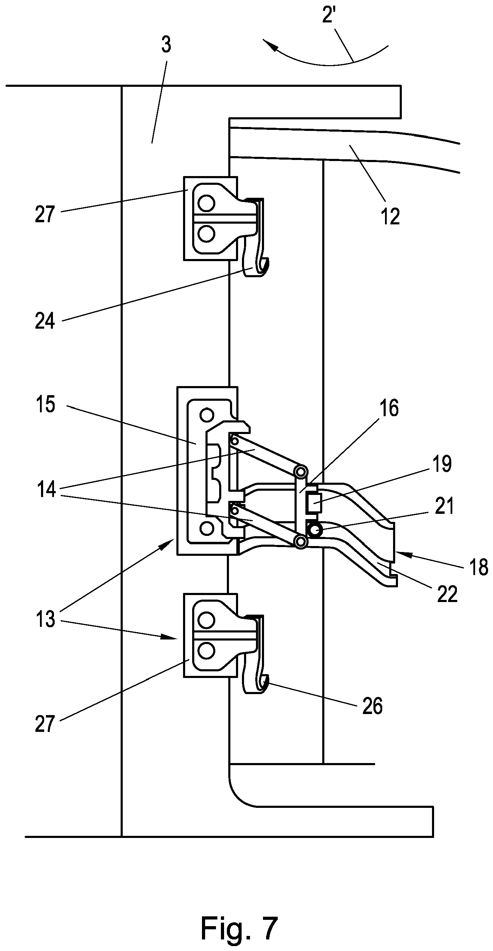

Wie aus Fig. 5 bis 7 ersichtlich, ist eine Führungseinrichtung 13 zum Führen des Klappenelements 12 beim Öffnen der Flugzeugtür 2 vorgesehen. Die Führungseinrichtung 13 weist in der gezeigten Ausführung zwei Führungsarme 14 auf, welche an den einen Enden über ein Befestigungselement 15 jeweils gelenkig an dem Tragarm 3 gelagert sind. Das Befestigungselement 15 ist an einer dem Klappenelement 12 zugewandten Stirnseite 3''' des Tragarms 3 montiert (vgl. Fig. 8 bis 11). An den gegenüberliegenden Enden sind die Führungsarme 15 über ein Verbindungselement 16 mit einem Führungselement 17 verbunden. Beim Öffnen der Flugzeugtür 2 ist das Führungselement 17 entlang einer Führungsbahn 18 an der Innenseite des Klappenelements 12 führbar. Zur Ausbildung der Führungsbahn 18 für das Führungselement 17 ist an der Innenseite des Klappenelements 12 ein Lagerelement 18' montiert, welches sich von dem verschwenkbaren Randbereich des Klappenelements 12 nach innen erstreckt.

Wie aus Fig. 5 bis 7 ersichtlich, weist das Führungselement 17 einerseits ein um eine im Wesentlichen vertikale Drehachse drehbares Rollenelement 19 auf, welches an einer im Wesentlichen vertikalen Führungsfläche der Führungsbahn 18 abrollbar ist. Zudem weist das Führungselement 17 ein um eine im Wesentlichen horizontale Drehachse drehendes Rollenelement 21 auf, welches an einer im Wesentlichen horizontalen Führungsfläche an der Oberseite eines Führungsvorsprungs 22 der Führungsbahn 18 abrollen kann.

Wie aus Fig. 5 bis 7 weiters ersichtlich, weist der Führungsvorsprung 22 für das horizontal drehende Rollenelement 21 einen Höhenverlauf, d.h. einen in vertikaler Richtung ansteigenden bzw. abfallenden Verlauf, auf. Hiermit kann der Schwenkwinkel der Führungsarme 14 und damit der Normalabstand zwischen den gelenkigen Verbindungen an den gegenüberliegenden Enden der Führungsarme 14 eingestellt werden.

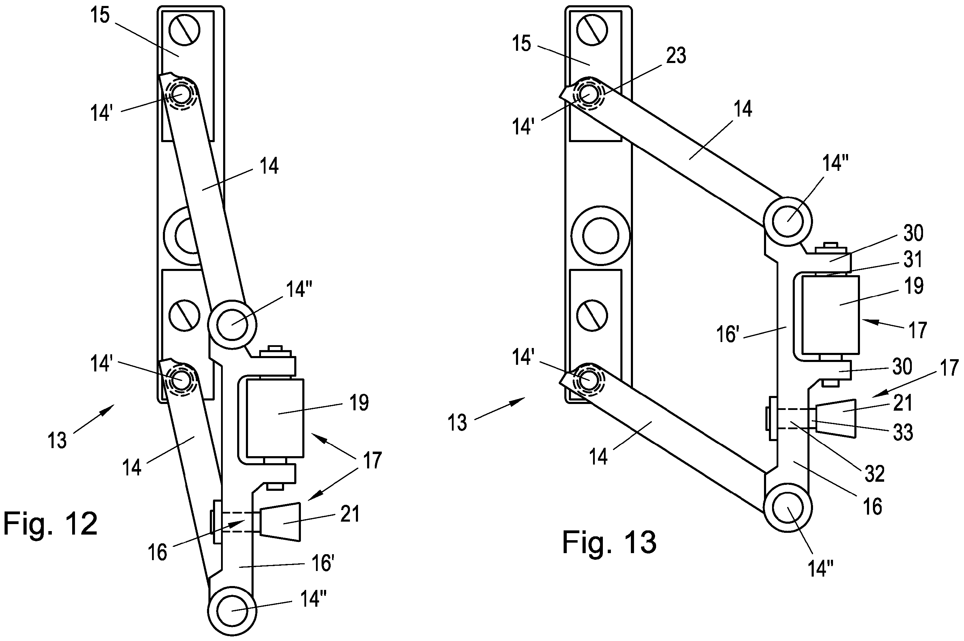

Die Führungsarme 14 der Führungseinrichtung 13 sind mit Federelementen 23 (vgl. Fig. 12 bis 14) verbunden, welche ein Drehmoment auf die Führungsarme 14 derart ausüben, dass die Führungsarme 14 in Richtung der nach oben verschwenkten Stellung vorgespannt sind. Beim Öffnen der Flugzeugtür 2 wird die Führungseinrichtung 13 von einem gestauchten Zustand, in welcher die Führungsarme 14 in einem ersten, steileren Winkel zur Horizontalen angeordnet sind, in einen auseinandergezogenen Zustand, in welcher die Führungsarme 14 in einem zweiten, flacheren Winkel zur Horizontalen angeordnet sind, überführt.

Wie aus Fig. 5 bis 7 weiters ersichtlich, weist die Führungseinrichtung 13 zudem an dem Tragarm zwei Kulissenelemente 24 auf, in welchen Führungsteile 25 an der Innenseite des Klappenelements 12 führbar sind. Diese Kulissenführung ist einerseits zu Beginn des Öffnungsvorgangs (vgl. Fig. 5) wirksam, um das Klappenelement 12 nach außen zu verschwenken. Andererseits ist die Kulissenführung dazu eingerichtet, das Klappenelement 12 am Ende des Schließvorgangs präzise in die bündig mit dem Verkleidungselement 11 ausgerichtete Stellung zu bringen.

Wie aus Fig. 5 bis 7 weiters ersichtlich, weisen die Kulissenelemente 24 jeweils einen unter einem Neigungswinkel zur Vertikalen verlaufenden, einseitig offenen Führungskanal 26 auf. Beim Anheben der Flugzeugtür 2 wird das Klappenelement 12 durch Verschiebung der Führungsteile 25 entlang der Führungskanäle 26 der Kulissenelemente 24 verschwenkt. Umgekehrt bewirkt die Kulissenführung, dass das Klappenelement 12 bei Erreichen der Schließstellung der Flugzeugtür 2 präzise in der bündig mit dem Verkleidungselement 11 abschließenden Stellung angeordnet wird. In der gezeigten Ausführung sind die Führungsteile 25 durch Führungsrollen 25' gebildet, welche an den die Führungskanäle 26 begrenzenden Wandungen der Kulissenelemente 24 abrollen. Beim Verschieben der Flugzeugtür 2 in die Zwischenstellung gleiten die Führungsteile 25 aus den Kulissenelementen 24. Danach übernimmt das Führungselement 17 in Verbindung mit der Führungsbahn 18 die Führung des Klappenelements 12.

Wie aus Fig. 5 bis 7 weiters ersichtlich, sind an dem Tragarm 3 zwei Kulissenelemente 24, nämlich je ein Kulissenelement 24 im oberen Endbereich und ein Kulissenelement 25 im unteren Endbereich des Klappenelements 12, vorgesehen. Die Kulissenelemente 24 sind in der gezeigten Ausführung hakenförmig ausgebildet. Zur Montage der Kulissenelemente 24 an dem Tragarm 3 sind Montageplatten 27 vorgesehen, welche an der Stirnseite 3"' des Tragarms 3 angebracht sind.

Fig. 8 bis 11 zeigen Querschnittsansichten der Vorrichtung 1 in verschiedenen Stadien des Öffnungsvorgangs, wobei Fig. 1 der Schließstellung der Flugzeugtür 2, Fig. 2 der angehobenen Zwischenstellung (vgl. die mit Pfeil 9 schematisch angedeutete Anhebebewegung), Fig. 3 einer Stellung während der Verschwenkung des Tragarms 3 in Pfeilrichtung 2' und Fig. 4 der Offenstellung der Flugzeugtür 2 entspricht.

Aus Fig. 8 ist insbesondere die bündige Anordnung von Verkleidungselement 11 und Klappenelement 12 in der Schließstellung der Flugzeugtür 2 ersichtlich. Weiters ist ersichtlich, dass der Tragarm 3 im Querschnitt in einem Winkel zueinander angeordnete Schenkel 3', 3'' aufweist, wodurch die Verschwenkung des Tragarms 3 um die angrenzende Kante des Flugzeugrumpfes 3 ermöglicht wird. Die Führungseinrichtung 13 zum Führen des Klappenelements 12 ist zwischen der dem Klappenelement 12 zugewandten Stirnseite 3''' des Tragarms 3 und dem Klappenelement 12 angeordnet. Somit ist die Führungseinrichtung 13 beim Öffnen der Flugzeugtür 2 für die Passagiere nicht sichtbar.

Gemäß Fig. 9 wurde das Klappenelement 12 beim Anheben der Flugzeugtür 2 in die Zwischenstellung mittels der Führungsteile 25 in den Kulissenelementen 24 nach außen verschwenkt, so dass ein Spalt 28 zwischen den aufeinandertreffenden Randbereichen des Klappenelements 12 bzw. des Verkleidungselements 11 gebildet wird. Das Klappenelement 12 ist mittels einer Federeinrichtung 29 in Richtung der bündigen Anordnung zwischen Verkleidungselement 11 und Klappenelement 12 in der Schließstellung der Flugzeugtür 2 vorgespannt. Die Führungseinrichtung 13 ist daher dazu eingerichtet, die Federwirkung der Federeinrichtung 29 beim Öffnen der Flugzeugtür 2 zu überwinden.

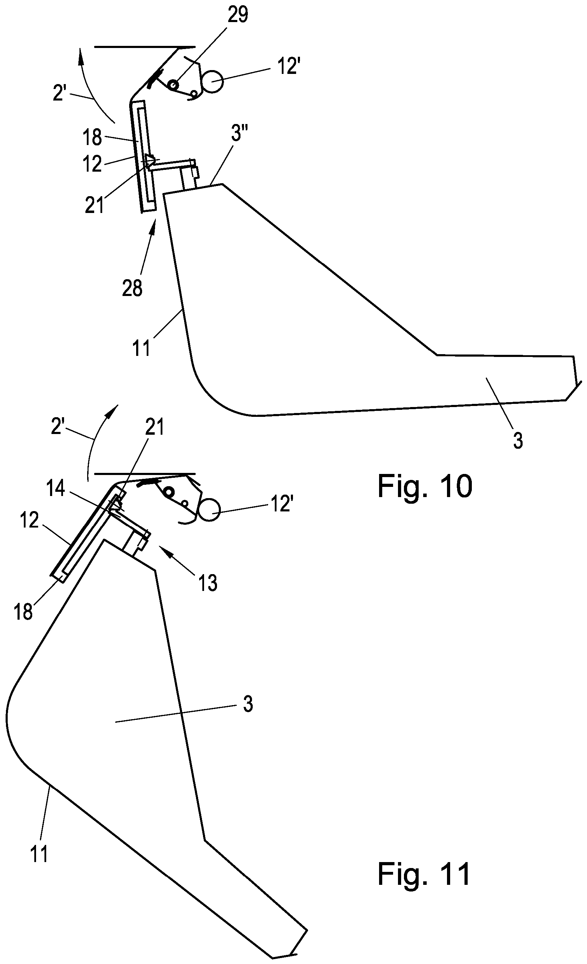

Gemäß Fig. 10 wird die Flugzeugtür 2 in Richtung der Offenstellung verschwenkt, wie schematisch mit Pfeil 2' angedeutet ist. Der freie Endbereich des Klappenelements 12 wird unter Beibehaltung des Spalts 28 über das Verkleidungselement 11, in Distanz dazu, geschoben. Dabei werden die Führungsarme 14 mit Unterstützung der Federelemente 23 bzw. des Führungsvorsprungs 22 hochgeschwenkt. Durch das Führungselement 17 wird eine Kraft auf die Führungsbahn 18 an der Innenseite des Klappenelements 12 ausgeübt, welche das Klappenelement 12 beim Öffnen der Flugzeugtür 2 in einem Abstand zum Verkleidungselement 11 hält.

Fig. 11 zeigt die Vorrichtung 1 in der Offenstellung der Flugzeugtür 2, wobei das Führungselement 17 bis zum Ende der Führungsbahn 18 an der Innenseite des Klappenelements 12 verschoben wurde.

Fig. 12 bis 14 zeigen Detailansichten der Führungseinrichtung 13 zum Führen des Klappenelements 12 beim Öffnen der Flugzeugtür 2. In der gezeigten Ausführung sind zwei idente Führungsarme 14 vorgesehen. Die Führungsarme 14 sind an den einen Enden über Gelenke 14' an dem Befestigungselement 15 gelagert, das an dem Tragarm 3 befestigt wird. Die anderen Enden der Führungsarme 14 sind über Gelenke 14'' mit dem Verbindungselement 16 verbunden, welches in der gezeigten Ausführung durch einen Verbindungsarm 16' gebildet ist. Der Verbindungsarm 16' ist an den Enden mit den Gelenken 14'' der Führungsarme 14 verbunden. Durch die gelenkige Anordnung des Verbindungsarms 16' zwischen den Führungsarmen 14 kann das Führungselement 17 mit dem vertikal drehenden Rollenelement 19 und dem horizontal drehenden Rollenelement 21 beim Hochschwenken der Führungsarme 4 in derselben Drehlage gehalten werden. Die Längsachse des Verbindungselements 16 ist daher unabhängig vom Schwenkzustand der Führungsarme 14 im Wesentlichen vertikal angeordnet.

Wie aus Fig. 12 bis 14 weiters ersichtlich, weist der Verbindungsarm 16' in dessen Längsrichtung beabstandete Aufnahmestellen 30 zur Aufnahme eines vertikalen Wellenelements 31 auf, mit welchem das vertikal drehende Rollenelement 19 gelagert wird. Zudem weist der Verbindungsarm 16 eine Bohrung 32 zur Aufnahme eines horizontalen Achsenelements 33 auf, mit welchem das horizontal drehende Rollenelement 21 gelagert wird.

Wie aus Fig. 12 bis 14 weiters ersichtlich, nimmt das horizontal drehende Rollenelement 21 im Durchmesser zum freien Ende hin zu. Demnach weist das Rollenelement eine Hinterschneidung auf, mit welcher die Führung des Rollenelements 21 auf dem Führungsvorsprung 22 der Führungsbahn 18 verbessert werden kann.

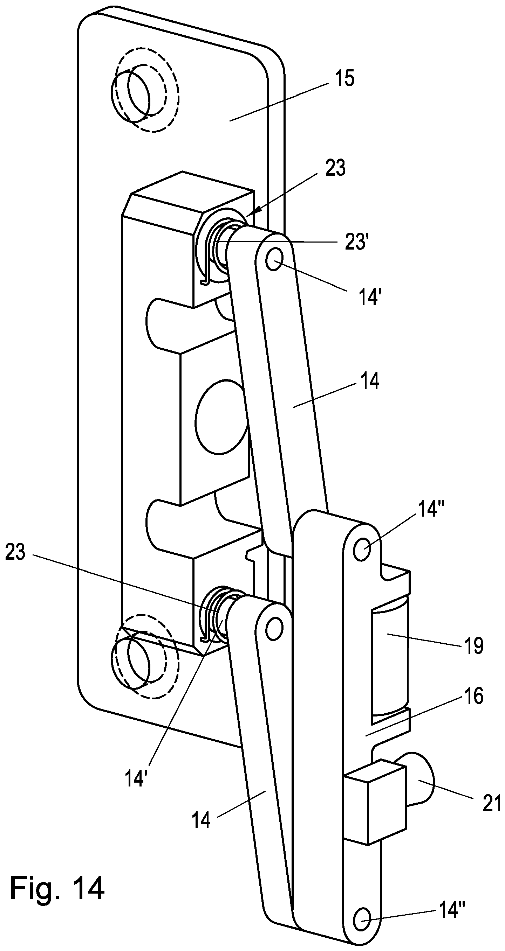

Wie aus Fig. 14 weiters ersichtlich, sind die Federelemente 23 zur Vorspannung der Führungsarme 14 in Richtung der hochgeschwenkten Stellung durch Torsionsfedern 23' gebildet. Die Torsionsfedern 23' sind an den Gelenken 14' des Führungsarms auf der Seite des Tragarms 3 angeordnet.

## Patentansprüche

1. Vorrichtung (1) zum Öffnen einer an einem Flugzeugrumpf (4) vorgesehenen Flugzeugtür (2), mit einem Tragarm (3), welcher gelenkig zwischen dem Flugzeugrumpf (4) und der Flugzeugtür (2) anordenbar ist, mit einer Öffnungseinrichtung (5) zum Öffnen der Flugzeugtür (2) durch Anheben der Flugzeugtür (2) aus einer Schließstellung in eine Zwischenstellung und Überführen der Flugzeugtür (2) aus der Zwischenstellung in eine Offenstellung, mit einer den Tragarm (3) in der Schließstellung der Flugzeugtür (2) im Wesentlichen vollständig abdeckenden Tragarmverkleidung (10), wobei die Tragarmverkleidung (10) ein unbeweglich am Tragarm (4) angeordnetes Verkleidungselement (11) und ein beim Öffnen der Flugzeugtür (2) zwischen einem im Wesentlichen bündig mit dem Verkleidungselement (11) abschließenden Zustand und einem mit dem Verkleidungselement (11) überlappenden Zustand verschwenkbares Klappenelement (12) aufweist, und mit einer Führungseinrichtung (13) zum Führen des Klappenelements (12) beim Öffnen der Flugzeugtür (2), **dadurch gekennzeichnet, dass** die Führungseinrichtung (13) zumindest einen Führungsarm (14) aufweist, welcher an dem einen Ende gelenkig mit dem Tragarm (3) und an dem anderen Ende mit zumindest einem Führungselement (17) verbunden ist, welches beim Öffnen der Flugzeugtür (2) entlang einer Führungsbahn (18) an der Innenseite des Klappenelements (12) führbar ist.

2. Vorrichtung (1) nach Anspruch 1, **dadurch gekennzeichnet, dass** das Führungselement (17) zumindest ein Rollenelement (19, 21) aufweist, welches an der Führungsbahn (18) an der Innenseite des Klappenelements (12) abrollbar ist.

3. Vorrichtung (1) nach Anspruch 2, **dadurch gekennzeichnet, dass** das Führungselement (17) ein um eine im Wesentlichen vertikale Drehachse drehbares Rollenelement (19) aufweist, welches an einer im Wesentlichen vertikalen Führungsfläche der Führungsbahn (18) abrollbar ist.

4. Vorrichtung (1) nach Anspruch 2 oder 3, **dadurch gekennzeichnet, dass** das Führungselement (17) ein um eine im Wesentlichen horizontale Drehachse drehendes Rollenelement (21) aufweist, welches an einem entsprechenden, insbesondere im Wesentlichen horizontalen Führungsvorsprung (22) der Führungsbahn (18) abrollbar ist.

5. Vorrichtung (1) nach Anspruch 4, **dadurch gekennzeichnet, dass** das horizontal drehende Rollenelement (21) im Durchmesser zum freien Ende hin zunimmt.

6. Vorrichtung (1) nach Anspruch 4 oder 5, **dadurch gekennzeichnet, dass** der Führungsvorsprung (22) für das horizontal drehende Rollenelement (21) einen Höhenverlauf aufweist.

7. Vorrichtung nach einem der Ansprüche 1 bis 6, **dadurch gekennzeichnet, dass** an der Innenseite des Klappenelements (12) ein die Führungsbahn (18) für das Führungselement (17) ausbildendes Lagerelement (18') montiert ist.

8. Vorrichtung (1) nach einem der Ansprüche 1 bis 7, **dadurch gekennzeichnet, dass** der zumindest eine Führungsarm (14) mit einem Federelement (23, 23') verbunden ist, so dass der zumindest eine Führungsarm (14) mit Unterstützung des Federelements () aus einem gestauchten Zustand der Führungseinrichtung (13) in der Schließstellung der Flugzeugtür (2) in einen zumindest teilweise auseinandergezogenen Zustand der Führungseinrichtung (13) in der Offenstellung der Flugzeugtür (2) überführbar ist, wobei als Federelement (23) bevorzugt eine Torsionsfeder (23') vorgesehen ist, welche bevorzugt um das Gelenk (14') des Führungsarms (14) auf der Seite des Tragarms (3) angeordnet ist.

9. Vorrichtung (1) nach einem der Ansprüche 1 bis 8, **dadurch gekennzeichnet, dass** die Führungseinrichtung (13) zwei insbesondere im Wesentlichen parallel zueinander angeordnete Führungsarme (14) aufweist, welche an den einen Enden gelenkig an dem Tragarm (3) und an den anderen Enden gelenkig mit einem Verbindungselement (16) zwischen den Führungsarmen (14) verbunden sind, wobei das Verbindungselement (16) bevorzugt einen länglichen Verbindungsarm (16') aufweist, dessen Enden gelenkig mit den Führungsarmen (14) verbunden sind.

10. Vorrichtung nach Anspruch 9, **dadurch gekennzeichnet, dass** der Verbindungsarm (16') in Längsrichtung beabstandete Aufnahmestellen (30) zur Aufnahme eines das vertikal drehende Rollenelement (19) lagernden Wellenelements (31) aufweist.

11. Vorrichtung (1) nach Anspruch 9 oder 10, **dadurch gekennzeichnet, dass** der Verbindungsarm (16') eine Bohrung (32) zur Aufnahme eines das horizontal drehende Rollenelement (21) lagernden Achsenelements (33) aufweist.

12. Vorrichtung (1) nach einem der Ansprüche 1 bis 11, **dadurch gekennzeichnet, dass** das Gelenk (14') zwischen dem Führungsarm (14) und dem Tragarm (3) an einem Befestigungselement (15) ausgebildet ist, welches bevorzugt an einer dem Klappenelement (12) zugewandten Stirnseite (3"') des Tragarms (3) montiert ist.

13. Vorrichtung (1) nach Anspruch 12, **dadurch gekennzeichnet, dass** die Führungseinrichtung (13) an dem Tragarm (3) ein Kulissenelement (24) aufweist, in welchem beim Anheben der Flugzeugtür (2) ein Führungsteil (25) an der Innenseite des Klappenelements (12) führbar ist, wobei das Kulissenelement (24) bevorzugt einen schräg zur Vertikalen verlaufenden, einseitig offenen Führungskanal (26) aufweist, so dass die Verschiebung des Führungsteils (25) entlang des Führungskanals (26) des Kulissenelements (24) beim Anheben der Flugzeugtür (2) in eine Verschwenkung des Klappenelements (12) umgesetzt wird.

14. Vorrichtung (1) nach Anspruch 13, **dadurch gekennzeichnet, dass** der Führungsteil (25) eine Führungsrolle (25') aufweist, welche an einer Wandung des Kulissenelements (24) abrollbar ist.

15. Vorrichtung (1) nach einem der Ansprüche 12 bis 14, **dadurch gekennzeichnet, dass** an dem Tragarm (3) zumindest zwei Kulissenelemente (24) für zumindest zwei Führungsteile (25) an der Innenseite des Klappenelements (12) vorgesehen sind, wobei vorzugsweise je ein Führungsteil (25) am oberen Endbereich und am unteren Endbereich des Klappenelements (12) angeordnet ist.

## Claims

1. A device (1) for opening an aircraft door (2) provided on an aircraft fuselage (4), said device comprising: a support arm (3) that can be arranged in an articulated manner between the aircraft fuselage (4) and the aircraft door (2); an opening system (5) for opening the aircraft door (2) by lifting the aircraft door (2) from a closed position into an intermediate position and transferring the aircraft door (2) from the intermediate position into an open position; a support arm cover (10) substantially entirely covering the support arm (3) in the closed position of the aircraft door (2), wherein the support arm cover (10) has a cover element (11) immovably arranged on the support arm (3), and a flap element (12) which, when the aircraft door (2) is opened, can swivel between a state in which said flap element is substantially flush with the cover element (11), and a state in which said flap element overlaps the cover element (11); and a guide system (13) for guiding the flap element (12) when the aircraft door (2) is opened, **characterized in that** the guide system (13) has at least one guide arm (14), one end of which is joined in an articulated manner to the support arm (3), and the other end of which is joined to at least one guide element (17), which guide element can be guided along a guide track (18) on the inner side of the flap element (12), when the aircraft door (2) is opened.

2. The device (1) according to claim 1, **characterized in that** the guide element (17) comprises at least one roll element (19, 21) which can roll on the guide track (18) on the inner side of the flap element (12).

3. The device (1) according to claim 2, **characterized in that** the guide element (17) comprises a roll element (19) which is rotatable about an essentially vertical rotational axis and which can roll on an essentially vertical guide surface of the guide track (18).

4. The device (1) according to claim 2 or 3, **characterized in that** the guide element (17) comprises a roll element (21) which is rotatable about an essentially horizontal rotational axis and which can roll on a corresponding, in particular essentially horizontal guide projection (22) of the guide track (18).

5. The device (1) according to claim 4, **characterized in that** the diameter of the horizontally rotating roll element (21) increases towards the free end.

6. The device (1) according to claim 4 or 5, **characterized in that** the guide projection (22) for the horizontally rotating roll element (21) comprises a height variation.

7. The device (1) according to one of claims 1 to 6, **characterized in that** on the inner side of the flap element (12), a bearing element (18') forming the guide track (18) for the guide element (17) is mounted.

8. The device (1) according to one of claims 1 to 7, **characterized in that** the at least one guide arm (14) is connected to a spring element (23, 23'), so that the at least one guide arm (14) can be transferred, with the help of the spring element ( ), from a compressed state of the guide system (13) in the closed position of the aircraft door (2) to an at least partially extended state of the guide system (13) in the open position of the aircraft door (2) wherein a torsion spring (23') is preferably provided as spring element (23), which torsion spring is preferably arranged about the hinge (14') of the guide arm (14) on the side of the support arm (3).

9. The device (1) according to one of claims 1 to 8, **characterized in that** the guide system (13) comprises two guide arms (14) which, in particular, are arranged relative to one another in an essentially parallel manner, the one ends of which are joined in an articulated manner to the support arm (3), and the other ends of which are joined in an articulated manner to a connecting element (16) between the guide arms (14), wherein the connecting element (16) preferably comprises an elongate connecting arm (16'), the ends of which are joined in an articulated manner to the guide arms (14).

10. The device (1) according to claim 9, **characterized in that** the connecting arm (16') comprises accommodating points (30) spaced in a longitudinal direction for accommodating a shaft element (31) supporting the vertically rotating roll element (19).

11. The device (1) according to one of claims 9 or 10, **characterized in that** the connecting arm (16') comprises a bore (32) for accommodating an axle element (33) supporting the horizontally rotating roll element (21).

12. The device (1) according to one of claims 1 to 11, **characterized in that** the hinge (14') is defined between the guide arm (14) and the support arm (3) on a mounting element (15), which is preferably mounted on a front side (3"') of the support arm (3), which front side faces the flap element (12).

13. The device (1) according to claim 12, **characterized in that** the guide system (13) comprises a link element (24) on the support arm (3), in which link element (24) a guide member (25) can be guided on the inner side of the flap element (12), when the aircraft door (2) is lifted, wherein the link element (24) preferably comprises a guide channel (26) that extends transversely to the vertical line and is open on one side, so that the shifting of the guide member (25) along the guide channel (26) of the link element (24) is converted into a swiveling of the flap element (12), when the aircraft door (2) is lifted.

14. The device (1) according to claim 13, **characterized in that** the guide member (25) comprises a guide roll (25') which can roll on a wall of the link element (24).

15. The device (1) according to one of claims 12 to 14, **characterized in that** on the support arm (3), at least two link elements (24) for at least two guide members (25) are provided on the inner side of the flap element (12), wherein preferably a guide member (25) is arranged each on the upper end portion and the lower end portion of the flap element (12).

## Revendications

1. Dispositif (1) permettant l'ouverture d'une porte d'avion (2) prévue au niveau d'une carlingue d'avion (4), avec un bras de support (3), qui peut être disposé de manière articulée entre la carlingue d'avion (4) et la porte d'avion (2), avec un dispositif d'ouverture (5) pour l'ouverture de la porte d'avion (2) par soulèvement de la porte d'avion (2) d'une position fermée vers une position intermédiaire et passage de la porte d'avion (2) de la position intermédiaire vers une position ouverte, avec un carénage de bras de support (10) recouvrant le bras de support (3) pratiquement entièrement dans la position fermée de la porte (2), le carénage du bras de support (10) comprenant un élément de carénage (11) disposé de manière fixe sur le bras de support (4) et un élément de clapet (12) pivotant entre un état de fermeture globalement aligné avec l'élément de carénage (11) et un état de superposition avec l'élément de carénage (11), et avec un dispositif de guidage (13) pour guider l'élément de clapet (12) lors de l'ouverture de la porte d'avion (2), **caractérisé en ce que** le dispositif de guidage (13) comporte au moins un bras de guidage (14) qui, relié à une extrémité, de manière articulée avec le bras de support (3) et à l'autre extrémité, avec au moins un élément de guidage (17), qui peut être guidé, lors de l'ouverture de la porte d'avion (2), le long d'une piste de guidage (18) sur le côté intérieur de l'élément de clapet (12).

2. Dispositif (1) selon la revendication 1, **caractérisé en ce que** l'élément de guidage (17) comprend au moins un élément de rouleau (19, 21) qui peut rouler sur la piste de guidage (18) sur le côté intérieur de l'élément de clapet (12).

3. Dispositif (1) selon la revendication 2, **caractérisé en ce que** l'élément de guidage (17) comprend un élément de rouleau (19) rotatif autour d'un axe de rotation globalement vertical, qui peut rouler sur une surface de guidage de la piste de guidage (18) globalement verticale.

4. Dispositif (1) selon la revendication 2 ou 3, **caractérisé en ce que** l'élément de guidage (17) comprend un élément de rouleau (21) rotatif autour d'un axe de rotation globalement horizontal, qui peut rouler sur une saillie de guidage (22) de la piste de guidage (18) globalement horizontale.

5. Dispositif (1) selon la revendication 4, **caractérisé en ce que** le diamètre de l'élément de rouleau (21) tournant horizontalement augmente en direction de l'extrémité libre.

6. Dispositif (1) selon la revendication 4 ou 5, **caractérisé en ce que** la saillie de guidage (22) présente une extension en hauteur pour l'élément de rouleau (21) tournant horizontalement.

7. Dispositif selon l'une des revendications 1 à 6, **caractérisé en ce que**, sur le côté intérieur de l'élément de clapet (12), est monté un élément de palier (18') formant la piste de guidage (18) pour l'élément de guidage (17).

8. Dispositif (1) selon l'une des revendications 1 à 7, **caractérisé en ce que** l'au moins un bras de guidage (14) est relié à un élément de ressort (23, 23'), de façon à ce que l'au moins un bras de guidage (14) puisse être amené, à l'aide de l'élément de ressort (23, 23'), d'un état comprimé du dispositif de guidage (13) dans la position de fermeture de la porte d'avion (2) vers un état au moins partiellement déployé du dispositif de guidage (13) dans la position ouverte de la porte d'avion (2), moyennant quoi l'élément de ressort (23) est de préférence un ressort de torsion (23'), disposé de préférence autour de l'articulation (14') du bras de guidage (14) sur le côté du bras de support (3).

9. Dispositif (1) selon l'une des revendications 1 à 8, **caractérisé en ce que** le dispositif de guidage (13) comporte deux bras de guidage (14) disposés de manière globalement parallèle entre eux, qui sont reliés, à une extrémité, de manière articulée, au bras de support (3) et, à l'autre extrémité, de manière articulée à un élément de liaison (16) entre les bras de guidage (14), l'élément de liaison (16) comportant de préférence un bras de liaison (16') allongé, dont les extrémités sont reliées de manière articulée aux bras de guidage (14).

10. Dispositif selon la revendication 9, **caractérisé en ce que** le bras de liaison (16') comprend des points de logement (30) distants entre eux dans la direction longitudinale, pour loger un élément d'arbre (31) s'appuyant contre l'élément de rouleau (19) qui tourne verticalement.

11. Dispositif (1) selon la revendication 9 ou 10, **caractérisé en ce que** le bras de liaison (16') comprend un alésage (32) pour le logement d'un élément d'axe (33) s'appuyant contre l'élément de rouleau (21) qui tourne horizontalement.

12. Dispositif (1) selon l'une des revendications 1 à 11, **caractérisé en ce que** l'articulation (14') est prévue entre le bras de guidage (14) et le bras de support (3) au niveau d'un élément de fixation (15) monté de préférence sur un côté frontal (3"') du bras de support (3) orienté vers l'élément de clapet (12).

13. Dispositif (1) selon la revendication 12, **caractérisé en ce que** le dispositif de guidage (13) comprend, sur le bras de support (3), un élément de coulisse (24) dans lequel, lors du soulèvement de la porte d'avion (2), une partie de guidage (25) peut être guidé le long du côté intérieur de l'élément de clapet (12), l'élément de coulisse (24) comprenant de préférence un canal de guidage (26) ouvert d'un côté et s'étendant de manière oblique par rapport à la verticale, de façon à ce que le déplacement de la partie de guidage (25) le long du canal de guidage (26) de l'élément de coulisse (24) soit converti, lors du soulèvement de la porte d'avion (2), en un pivotement de l'élément de clapet (12).

14. Dispositif (1) selon la revendication 13, **caractérisé en ce que** la partie de guidage (25) comprend un rouleau de guidage (25') qui peut rouler contre une paroi de l'élément de coulisse (24).

15. Dispositif (1) selon l'une des revendications 12 à 14, **caractérisé en ce que**, sur le bras de support (3), sont prévus au moins deux éléments de coulisse (24) pour au moins deux parties de guidage (25) sur le côté intérieur de l'élément de clapet (12), de préférence une partie de guidage (25) étant disposée au niveau de la zone d'extrémité supérieure et une autre étant disposée au niveau de la zone d'extrémité inférieure de l'élément de clapet (12).
